# EUROPEAN PATENT SPECIFICATION

(11) **EP 1 802 179 B1**
(45) Date of publication and mention of the grant of the patent: **12.12.2012**
(21) Application number: 06256379.6
(22) Date of filing: 14.12.2006
(51) Int. Cl.: H05H 1/34

(54) **Plasma arc torch, and methods of assembling and disassembling a plasma arc torch**
Lichtbogen-Plasmabrenner und Montage- und Demontageverfahren eines Lichtbogen-Plasmabrenners
Torche à plasma d'arc, et procédés de montage et démontage d'une torche à plasma d'arc

(30) Priority: 21.12.2005 US 313357
(43) Date of publication of application: 27.06.2007
(73) Proprietor: THE ESAB GROUP, INC., Florence, South Carolina 29501-0545 (US)
(72) Inventor: Severance, Wayne Stanley Jr., South Carolina 29532 (US)
(74) Representative: Kinsler, Maureen Catherine

(56) References cited:
- DE-A1- 19 727 450
- US-A- 5 101 088
- US-A- 5 214 262
- US-A- 5 893 985
- US-A1- 2003 209 525

## Description

### BACKGROUND OF THE INVENTION

The present invention relates to plasma arc torches and to methods of assembling and disassembling such torches.

A plasma arc torch generally comprises a torch body assembly that supports an electrode for emitting an electrical arc that attaches to a workpiece to be operated upon, and a nozzle for directing a flow of a plasma gas toward the workpiece such that the plasma gas stream surrounds the arc. The electrode and nozzle generally are regarded as "consumables" that are subject to deterioration during operation of the torch and that therefore must be replaced periodically in order to restore the torch to a proper condition for satisfactory operation. Typically a plasma arc torch includes a number of front end parts that must be removed in order to gain access to the consumables for replacement. In many existing plasma arc torches, the various front end parts must be removed one at a time, and then reinstalled one at a time after replacement of the consumables. The process thus is relatively inefficient and cumbersome.

US5101088 describes a torch for plasma cutting. The torch includes a tubular casing with a nozzle having an orifice at one end. A nonmelting electrode is centred in the casing and an electrode terminal is arranged to connect to a power source. A gas duct extends from a gas inlet connectable to a gas source to an orifice placed at the tip of the nozzle.

### BRIEF SUMMARY OF THE INVENTION

The present Invention addresses the above needs and achieves other advantages, by providing a plasma arc torch and methods for assembling and disassembling a plasma arc torch wherein, in one embodiment of the invention, a plurality of front end parts form a unit that is removable from the torch in a single operation to gain access to the electrode. The unit can then be reinstalled in the torch in a single operation after replacement of the electrode.

In accordance with one embodiment of the invention, a plasma arc torch comprises a torch body assembly comprising a generally cylindrical torch body and an insulator body disposed in the torch body, and an electrode assembly mounted in the torch body assembly, an electrode of the electrode assembly projecting out from a front end of the insulator body. A nozzle is engaged with the torch body assembly and defines a central bore extending therethrough for directing a flow of a plasma gas from the central bore through an exit orifice defined in a front end of the nozzle, the electrode being received within the central bore such that an emissive element at a free end of the electrode is proximate the exit orifice. The nozzle comprises an externally threaded portion and a front-facing surface spaced rearwardly of the externally threaded portion.

The torch further comprises a hollow generally cylindrical nozzle retaining cup assembly comprising a rear portion forming a releasable connection with the torch body assembly and a front portion defining an aperture through which the externally threaded portion of the nozzle projects, the front portion further defining a rear-facing surface surrounding the aperture and opposing the front-facing surface of the nozzle. An internally threaded retainer engages the externally threaded portion of the nozzle and the front portion of the nozzle retaining cup assembly to urge the front-facing surface of the nozzle toward the rear-facing surface of the nozzle retaining cup assembly so as to retain the nozzle retaining cup assembly and the nozzle together as a unit. The unit is removable from the torch body assembly by disengaging the releasable connection between the nozzle retaining cup assembly and the torch body assembly so as to provide access to the electrode assembly.

In one embodiment, the releasable connection between the nozzle retaining cup assembly and the torch body assembly can comprise a threaded connection.

The removable unit of front end parts can further comprise elements for directing a flow of secondary or shielding gas toward the workpiece surrounding the primary flow of plasma gas. In one embodiment, the unit further comprises a shielding gas nozzle engaging the nozzle and concentrically surrounding the nozzle such that a shielding gas flow passage is defined between a radially inner surface of the shielding gas nozzle and a radially outer surface of the nozzle. The unit further includes a shield retainer engaging the shielding gas nozzle to retain the shielding gas nozzle in engagement with the nozzle, the shield retainer forming a releasable connection with the nozzle retaining cup assembly. The releasable connection can comprise a threaded connection.

A diffuser can be disposed between the shielding gas nozzle and the nozzle for conditioning a flow of shielding gas through the shielding gas flow passage. For example, the diffuser can direct the shielding gas with a tangential or swirl component of velocity through the shielding gas flow passage. The diffuser can be made of an insulating material to electrically insulate the nozzle and shielding gas nozzle from each other.

In one embodiment of the invention, the nozzle retaining cup assembly comprises a retaining cup defining the aperture and the rear-facing surface, and a cup holder formed separately from the retaining cup, the cup holder forming the releasable connection with the torch body assembly, the cup holder being affixed to the retaining cup. The cup holder can comprise an electrically conductive material. The retaining cup can comprise an electrically insulating material.

In accordance with a method aspect of the invention, an assembly fixture is provided having a connection portion structured and arranged to form a releasable connection with the rear portion of the nozzle retaining cup assembly, the assembly fixture defining a support surface for engaging a rear end of the nozzle and a centering portion for engaging the nozzle so as to position the nozzle concentrically with respect to the assembly fixture. A method for assembling a plasma arc torch comprises the steps of positioning the nozzle on the assembly fixture with the rear end of the nozzle on the support surface and the centering portion of the assembly fixture engaging the nozzle, placing the retaining cup assembly over the nozzle on the assembly fixture such that the externally threaded portion of the nozzle projects through the aperture and the rear-facing surface of the nozzle retaining cup assembly opposes the front-facing surface of the nozzle, and forming the releasable connection between the rear portion of the retaining cup assembly and the connection portion of the assembly fixture. The internally threaded retainer is then engaged with the externally threaded portion of the nozzle and with the front portion of the nozzle retaining cup assembly to retain the nozzle retaining cup assembly and the nozzle together as a unit, and the unit is removed from the assembly fixture and assembled with the torch body assembly by forming the releasable connection between the nozzle retaining cup assembly and the torch body assembly.

A method for disassembling a plasma arc torch in accordance with another embodiment of the invention comprises disengaging the releasable connection between the nozzle retaining cup assembly and the torch body assembly, and removing the unit from the torch body assembly so as to provide access to the electrode assembly. The electrode assembly can then be removed and replaced in whole or in part, and the unit reassembled with the torch body assembly.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a sectioned side elevation of a known shielding gas plasma arc torch;
FIG. 1A is an enlarged view showing the lower portion of the torch of FIG. 1;
FIG. 2 is a sectioned side elevation of the torch of FIG. 1, taken on a plane rotated with respect to the plane of FIG. 1;
FIG. 3 is a sectioned side elevation of an assembly fixture supporting a pre-assembled unit of front end torch parts in accordance with one embodiment of the invention; and
FIG. 4 is a side elevation of the assembly fixture.

### DETAILED DESCRIPTION OF THE INVENTION

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

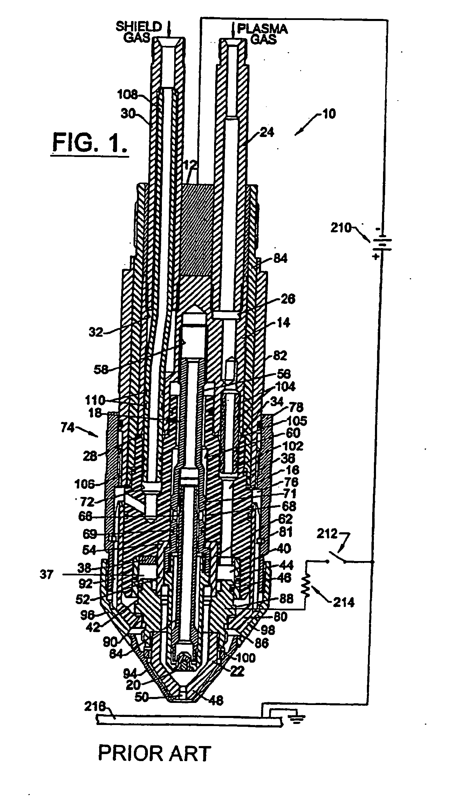

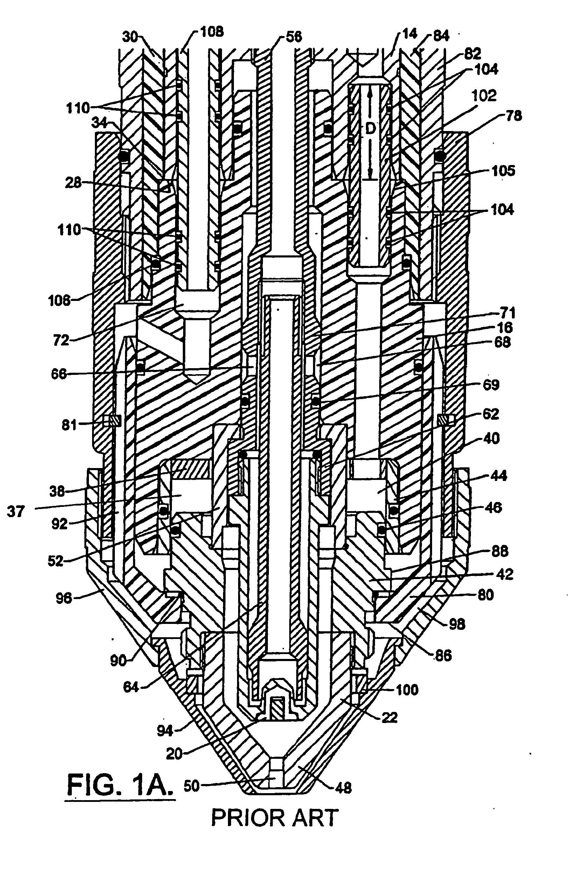

With reference to FIGS. 1 and 1A, a known plasma arc torch of a type to which the present invention is applicable is broadly indicated by reference numeral **10.** The torch can be a shielding gas torch generally as described in U.S. Patent No. 6,346,685. The torch **10** provides a swirling curtain or jet of shielding gas surrounding the electric arc during a working mode of operation of the torch. The torch **10** includes a generally cylindrical upper or rear insulator body **12** that may be formed of a potting compound or the like, a generally cylindrical main torch body **14** connected to the rear insulator body **12** and generally made of a conductive material such as metal, a generally cylindrical lower or front insulator body **16** connected to the main torch body **14,** an electrode assembly **18** extending through a passage in the main torch body **14** and front insulator body **16** and supporting an electrode **20** at a free end of the electrode assembly, and a nozzle assembly **22** connected to the insulator body **16** adjacent the electrode **20.** The main torch body **14** and insulator bodies **12, 16** collectively form a torch body assembly to which various front end parts are releasably attached, as further described below.

A plasma gas connector tube **24** extends through the rear insulator body **12** and is connected by screw threads into a plasma gas passage **26** of the main torch body **14.** The plasma gas passage **26** extends through the main torch body **14** to a lower end face **28** thereof for supplying a plasma gas (sometimes referred to as a cutting gas), such as oxygen, air, nitrogen, or argon, to a corresponding passage in the insulator body **16,** as further described below.

A shielding gas connector tube **30** extends through the rear insulator body **12** and is connected by screw threads into a shielding gas passage **32** of the main torch body **14.** The shielding gas passage **32** extends through the main torch body **14** to the lower end face **28** for supplying a shielding gas, such as argon, to a corresponding passage in the insulator body **16.**

The insulator body **16** has an upper end face **34** that abuts the lower end face **28** of the main torch body. A plasma gas passage **36** extends through the insulator body **16** from the upper end face **34** into a cylindrical counterbore **37** in the lower end of the insulator body **16.** As further described below, the counterbore **37,** together with the upper end of the nozzle assembly **22,** forms a plasma gas chamber **40** from which plasma gas is supplied to a primary or plasma gas nozzle of the torch. Plasma gas from a suitable source enters the plasma gas chamber **40** by flowing through the plasma gas connector tube **24,** through the plasma gas passage **26** in the main torch body **14,** into the plasma gas passage **36** of the insulator body **16** that is aligned with the passage **26,** and into the chamber **40.** An electrical contact ring assembly **38** is disposed in the counterbore **37** for establishing electrical connection with the nozzle assembly **22.**

The nozzle assembly **22** is a two-piece assembly comprising an upper nozzle member **42** and a separately formed lower nozzle tip **48.** The upper nozzle member **42** has a generally cylindrical upper portion slidingly received within a metal insert sleeve **44** that is inserted into the counterbore **37** of the insulator body **16.** An O-ring **46** seals the sliding interconnection between the upper nozzle member **42** and the metal insert sleeve **44.** The lower nozzle tip **48** is of generally frustoconical form and is threaded into the upper nozzle member **42** and includes a nozzle exit orifice **50** at the tip end thereof. As an alternative to the two-piece nozzle assembly **22,** the nozzle assembly can be formed as a one-piece nozzle, with the upper nozzle member **42** and lower nozzle tip **48** formed as an integral one-piece structure. In any event, a plasma gas flow path exists from the plasma gas chamber **40** through the upper nozzle member **42** and through the nozzle tip **48** for directing a jet of plasma gas out the nozzle exit orifice **50** to aid in performing a work operation on a workpiece.

The plasma gas jet preferably has a swirl component created, in known manner, by a hollow cylindrical ceramic gas baffle **52** partially disposed in a counterbore recess **54** of the insulator body **16.** A lower end of the baffle **52** abuts an annular flange face of the upper nozzle member **42,** and an annular space is formed between the baffle **52** and the inner surface of the upper nozzle member **42.** The baffle **52** has non-radial holes (not shown) for directing plasma gas from the chamber **40** into the central passageway of the upper nozzle member **42** with a swirl component of velocity.

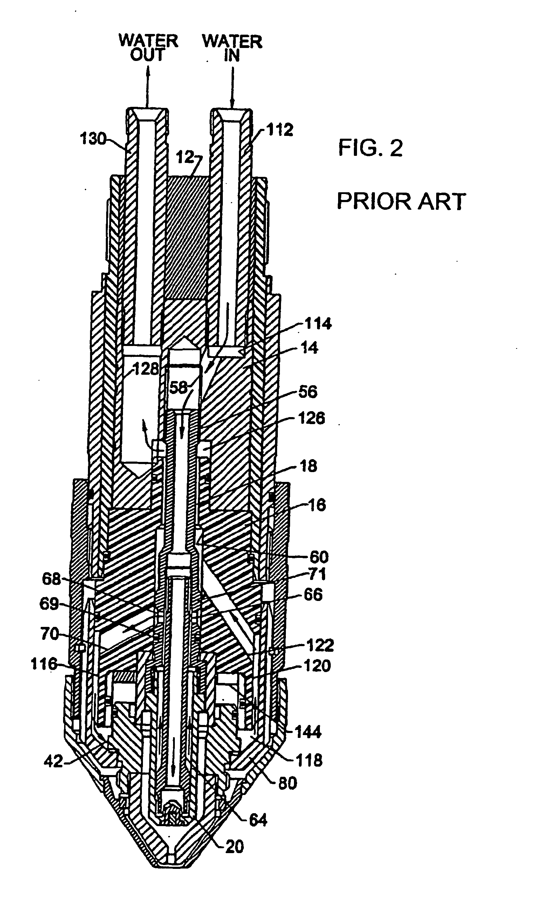

The electrode assembly **18** includes an upper tubular electrode holder **56** that has its upper end connected by screw threads within a blind axial bore **58** in the main torch body **14.** The upper electrode holder **56** extends into an axial bore **60** formed through the insulator body **16,** and the lower end of the electrode holder **56** includes an enlarged internally screw-threaded coupler **62** that has an outer diameter slightly smaller than the inner diameter of the ceramic gas baffle **52** that is sleeved over the outside of the coupler **62.** The electrode holder also includes internal screw threads spaced above the coupler **62** for threadingly receiving a lower tube **64** that supplies coolant to the electrode **20,** as further described below, and which extends outward from the axial bore of the insulator body **16** into the central passage of the nozzle tip **48.** The electrode **20** can be of the type described in U.S. Patent No. 5,097,111, assigned to the assignee of the present application. The electrode **20** comprises a cup-shaped body whose open upper end is threaded by screw threads into the coupler **62** at the lower end of the electrode holder **56,** and whose capped lower end is closely adjacent the lower end of the lower coolant tube **64.** A coolant circulating space exists between the inner wall of the electrode **20** and the outer wall of the coolant tube **64,** and between the outer wall of the coolant tube **64** and the inner wall of the electrode holder **56.** The electrode holder **56** includes a plurality of holes **66** for supplying coolant from the space within the electrode holder to a space **68** between the electrode holder and the inner wall of the axial bore **60** in the insulator body **16.** A seal **69** located between the holes **66** and the coupler **62** seals against the inner wall of the bore **60** to prevent coolant in the space **68** from flowing past the seal **69** toward the coupler **62.** A raised annular rib or dam **71** on the outer surface of the electrode holder **56** is located on the other side of the holes **66** from the seal **69,** for reasons that will be made apparent below. A coolant supply passage **70** (FIG. 2) extends through the insulator body from the space **68** through the outer cylindrical surface of the insulator body **16** for supplying coolant to the nozzle assembly **22,** as further described below.

The torch **10** can include features providing improved sealing of the fluid connections between the main torch body **14** and the insulator body **16** so as to reduce the likelihood of liquid such as coolant wetting the adjoining surfaces of these bodies and finding its way to a part at nozzle potential such as the nozzle retaining cup holder **78,** thereby establishing a current leakage path from the main torch body at electrode potential to the cup holder **78,** which can make starting the torch difficult. To this end, a connector assembly fluidly couples the plasma gas passage **26** of main torch body **14** to the plasma gas passage **36** of the insulator body **16** and includes a coupling tube **102** having one end portion inserted into the passage **26** and the other end portion inserted into the passage **36.** Each end portion includes a resilient compressible seal encircling the coupling tube. In the preferred embodiment of the invention shown in FIG. 1, each seal comprises a gland seal having a pair of O-rings **104** which are spaced apart along the coupling tube **102** and retained in grooves formed therein. The O-rings **104** are compressed between the coupling tube **102** and the inner surfaces of the passages **26** and **36.** When the coupling tube **102** is inserted into each of the passages, air tends to be trapped between the O-rings **104** of each seal, thus creating an insulating air space.

Each of the passages **26** and **36** includes a receiving portion into which the coupling tube **102** is inserted, comprising a generally cylindrical passage having a tapered or flared entrance portion **105.** The flared entrance portion **105** facilitates inserting the coupling tube **102** and O-rings **104** into the receiving portion of the passage.

The torch can also include an O-ring **106** disposed between the outer surface of the insulator body **16** and the inner surface of the insulating member **84** to prevent liquid from migrating therebetween and into contact with the cup holder **78.** This sealing arrangement thus eliminates the "face seals" of prior plasma arc torches, in which the abutting faces of the main torch body and insulator body compress O-rings retained in recesses in one or both of the faces. Such face seals can allow liquid to wet the adjoining faces, particularly when the insulator body is disassembled from the main torch body and then reassembled, such as during repair and maintenance of the torch. In addition, the O-rings of the face seals are easy to inadvertently dislodge from their desired positions, thus preventing a proper seal. With the gland seals as described herein, the O-rings are held in place in grooves by their own elasticity and are not prone to being inadvertently dislodged.

The torch can also include features for lengthening the potential electrical path from the main torch body **14** through the shielding gas to the nozzle retaining cup holder **78.** To this end, an elongate insulating conduit **108** is disposed within the shielding gas passage **72** of the insulator body **16,** and extends through the shielding gas passage **32** in the main torch body **14** and into the shielding gas connector tube **30** through which shielding gas is supplied to the torch. The portions of the conduit **108** residing within the passages **32** and **72** are sealed by resilient compressible seals to prevent shielding gas from passing between the inner walls of the passages and the conduit. In the embodiment illustrated in FIG. 1, the seals comprise pairs of spaced-apart O-rings **110** retained in grooves in the outer surface of the conduit **108** and compressed between the conduit and the inner walls of the passages. The conduit **108** thus prevents an electrical leakage path from being established over the relatively short length between the lower end of the main torch body **14** and the cup holder **78.** Instead, the potential leakage path is between the shielding gas connector tube **30** at the upper end of the conduit **108,** through the passages **32** and **72,** and to the cup holder **78.** Substantially lengthening the path in this manner results in substantially increasing the total resistance of the path, thus reducing the likelihood of current leaking through the shielding gas during starting of the torch.

With primary reference to FIG. 2, the coolant circuits for cooling the electrode **20** and nozzle assembly **22** are now described. The torch **10** includes a coolant inlet connector tube **112** which extends through the rear insulator body **12** and is secured within a coolant inlet passage **114** in the main torch body **14.** The coolant inlet passage **114** connects to the center axial bore **58** in the main torch body. Coolant is thus supplied into the bore **58** and thence into the internal passage through the electrode holder **56,** through the internal passage of the coolant tube **64,** and into the space between the tube **64** and the electrode **20.** Heat is transferred to the liquid coolant from the lower end of the electrode (from which the arc emanates) and the liquid then flows through a passage between the lower end of the coolant tube **64** and the electrode **20** and upwardly through the annular space between the coolant tube **64** and the electrode **20,** and then into the annular space between the coolant tube **64** and the electrode holder **18.**

The coolant then flows out through the holes **66** into the space **68** and into the passage **70** through the insulator body **16.** The seal **69** prevents the coolant in the space **68** from flowing toward the coupler **62** at the lower end of the holder **56,** and the dam **71** substantially prevents coolant from flowing past the dam **71** in the other direction, although there is not a positive seal between the dam **71** and the inner wall of the bore **60.** Thus, the coolant in space **68** is largely constrained to flow into the passage **70.** The insulator body **16** includes a groove or flattened portion **116** which permits coolant to flow from the passage **70** between the insulator body **16** and the nozzle retaining cup **80** and into a coolant chamber **118** which surrounds the upper nozzle member **42.** The coolant flows around the upper nozzle member **42** to cool the nozzle assembly.

Coolant is returned from the nozzle assembly via a second groove or flattened portion **120** angularly displaced from the portion **116,** and into a coolant return passage **122** in the insulator body **16.** The coolant return passage **122** extends into a portion of the axial bore **60** which is separated from the coolant supply passage **70** by the dam **71.** The coolant then flows between the electrode holder **56** and the inner wall of the bore **60** and the bore **58** in the main torch body **14** into an annular space **126** which is connected with a coolant return passage **128** formed in the main torch body **14,** and out the coolant return passage **128** via a coolant return connector tube **130** secured therein. Typically, returned coolant is recirculated in a closed loop back to the torch after being cooled.

During starting of the torch **10,** a difference in electrical voltage potential is established between the electrode **20** and the nozzle tip **48** so that an electric arc forms across the gap therebetween. Plasma gas is then flowed through the nozzle assembly **22** and the electric arc is blown outward from the nozzle orifice **50** until it attaches to a workpiece, at which point the nozzle assembly **22** is disconnected from the electric source so that the arc exists between the electrode **20** and the workpiece. The torch is then in a working mode of operation.

For controlling the work operation being performed, it is known to use a control fluid such as a shielding gas to surround the arc with a swirling curtain of gas. To this end, the insulator body **16** includes a shielding gas passage **72** that extends from the upper end face **34** axially into the insulator body, and then angles outwardly and extends through the cylindrical outer surface of the insulator body. A nozzle retaining cup assembly **74** surrounds the insulator body **16** to create a generally annular shielding gas chamber **76** between the insulator body **16** and the nozzle retaining cup assembly **74.** Shielding gas is supplied through the shielding gas passage **72** of the insulator body **16** into the shielding gas chamber **76.**

The nozzle retaining cup assembly **74** includes a nozzle retaining cup holder **78** and a nozzle retaining cup **80** that is secured within the holder **78** by a snap ring **81** or the like. The nozzle retaining cup holder **78** is a generally cylindrical sleeve, preferably formed of metal, that is threaded over the lower end of a torch outer housing **82** that surrounds the main torch body **14.** Insulation **84** is interposed between the outer housing **82** and the main torch body **14.** The nozzle retaining cup **80** preferably is formed of plastic and has a generally cylindrical upper portion that is secured within the cup holder **78** by the snap ring **81** and a generally frustoconical lower portion that extends toward the end of the torch and includes an inwardly directed flange **86.** The flange **86** confronts an outwardly directed flange **88** on the upper nozzle member **42** and contacts an O-ring **90** disposed therebetween. Thus, in threading the nozzle retaining cup assembly **74** onto the outer housing **82,** the nozzle retaining cup **80** draws the nozzle assembly **22** upward into the metal insert sleeve **44** in the insulator body **16.** The nozzle assembly **22** is thereby made to contact an electrical contact ring secured within the counterbore **37** of the insulator body **16.**

The nozzle retaining cup **80** fits loosely within the cup holder **78,** and includes longitudinal grooves **92** in its outer surface for the passage of shielding gas from the chamber **76** toward the end of the torch. Alternatively or additionally, grooves (not shown) may be formed in the inner surface of the cup holder **78.** The nozzle retaining cup **80** and cup holder **78** collectively form a nozzle retaining cup assembly. A shielding gas nozzle **94** of generally frustoconical form concentrically surrounds and is spaced outwardly of the nozzle tip **48** and is held by a shield retainer **96** that is threaded over the lower end of the cup holder **78.** A shielding gas flow path **98** thus extends from the longitudinal grooves **92** in retaining cup **80,** between the shield retainer **96** and the retaining cup **80** and upper nozzle member **42,** and between the shielding gas nozzle **94** and the plasma gas nozzle tip **48.**

The shielding gas nozzle **94** includes a diffuser **100** that in known manner imparts a swirl to the shielding gas flowing into the flow path between the shielding gas nozzle **94** and the nozzle tip **48.** Thus, a swirling curtain of shielding gas is created surrounding the jet of plasma gas and the arc emanating from the nozzle exit orifice **50.** The diffuser **100** can be made of an insulating material to electrically insulate the nozzle and shielding gas nozzle from each other.

In the known torch **10** of FIGS. 1 and 1A, when it is desired to replace the electrode **20,** it is necessary to first unscrew the shield retainer **96** from the cup holder **78** and remove the shield retainer **96,** the shielding gas nozzle **94,** and the diffuser **100.** Next, the cup holder **78** is unscrewed from the torch outer housing **82** and the cup holder **78** and retaining cup **80** are removed. The nozzle assembly **22** is then removed to gain access to the electrode **20.** The electrode can then be unscrewed from the electrode holder **56** and a replacement electrode can be screwed into the electrode holder. The torch is then reassembled by reversing the above-described disassembly sequence. It will be appreciated that this disassembly and assembly process is relatively time-consuming because of the number of separate steps that must be performed.

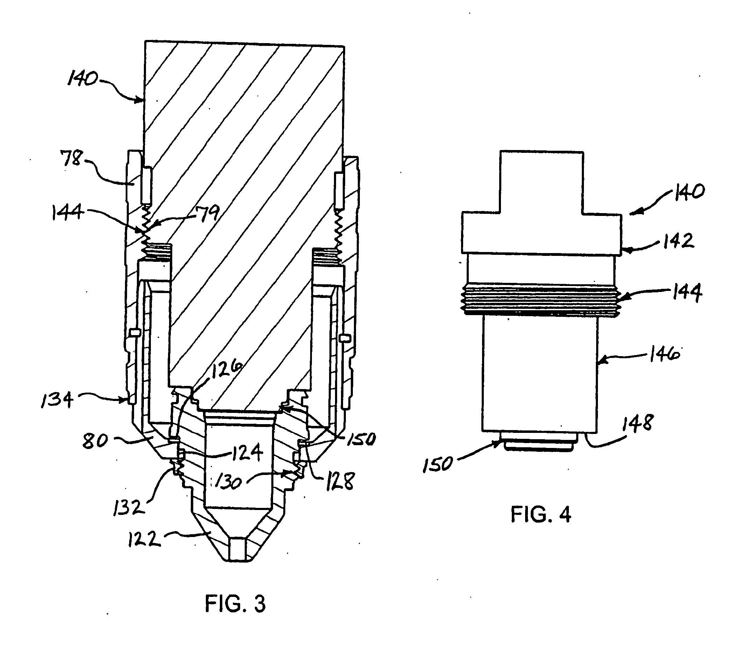

The present invention addresses this problem. As illustrated in FIG. 3, the assembly and disassembly of the torch is facilitated by providing the nozzle retaining cup assembly **78, 80** and the nozzle **122** as a cohesive unit that is removable from the torch body assembly as a unit and replaceable as a unit. In the illustrated embodiment, the nozzle **122** is a one-piece structure, but alternatively the nozzle can be a two-piece nozzle **22** generally as described previously, as long as the nozzle has the features facilitating its attachment to the nozzle retaining cup assembly **78, 80** as explained below.

In this regard, the retaining cup **80** at its front end defines an aperture **124,** and a rear-facing surface **126** that surrounds the aperture **124.** The aperture **124** and the nozzle **122** are configured such that a front portion of the nozzle can pass through the aperture and project out from the front end of the retaining cup **80,** and such that a front-facing surface **128** of the nozzle opposes the rear-facing surface **126** of the retaining cup. The front portion of the nozzle that projects out from the front end of the retaining cup includes an externally threaded portion **130** adjacent a front end face of the retaining cup. An internally threaded retainer **132** is screwed onto the externally threaded portion **130** of the nozzle such that the retainer abuts the front end face of the retaining cup **80** and thereby urges the front-facing surface **128** of the nozzle against the rear-facing surface **126** of the retaining cup. A resiliently compressible sealing element such as an O-ring (see element **90** in FIG. 1A) can be disposed between these surfaces to seal the interface between the nozzle and retaining cup. The engagement of the retainer **132** with the nozzle portion **130** thus secures the nozzle to the nozzle retaining cup assembly **78, 80** so as to form a unit **134** that can be installed into and removed from the torch body assembly in a single step.

FIG. 3 also illustrates the use of an assembly fixture **140** to facilitate assembly of the unit **134.** The assembly fixture can be fixedly secured to a suitable support (e.g., a work bench) so that it is prevented from moving or rotating during its use. The assembly fixture, shown in isolated side elevation in FIG. 4, comprises a substantially rigid body of suitable material such as brass, aluminum alloy, steel, or the like. The fixture has a generally cylindrical portion **142** whose outside diameter is slightly smaller than the inside diameter of the cup holder **78** at the cylindrical portion **142** can be received within the cup holder. The cup holder **78** includes an internally threaded portion **79** (FIG. 3) for forming a releasable connection with an externally threaded portion of the torch outer housing **82** (see FIG. 1A). The cylindrical portion **142** of the assembly fixture includes an externally threaded portion **144** that is configured to form a releasable connection with the internally threaded portion **79** of the cup holder.

Extending forward from the externally threaded portion **144** of the fixture is a generally cylindrical portion **146** of smaller outside diameter. A front end of the portion **146** defines a generally annular support surface **148** concentric with a central longitudinal axis of the assembly fixture and concentric with the cylindrical portion **142** and threaded portion **144.** A centering portion **150** projects forward from the front end of the fixture and is configured to fit into the central bore of the nozzle **122** and engage the inner surface of the bore so as to position the nozzle **122** concentrically with respect to the fixture's axis.

With reference to FIG. 3, to assemble the unit **134,** the nozzle **122** is placed on the fixture **140** with the rear end of the nozzle engaging the support surface **148** and with the centering portion **150** of the fixture inserted into the bore of the nozzle. A sealing element such as an O-ring (not shown, but see element **90** in FIG. 1A) is placed on the front-facing surface **128** of the nozzle. The nozzle retaining cup assembly **78, 80** is then placed over the nozzle such that the front end portion of the nozzle passes through the aperture **124** of the retaining cup **80,** and the cup holder **78** is screwed onto the threaded portion **144** of the fixture. The externally threaded portion **130** of the nozzle projects out from the aperture **124** of the retaining cup. The internally threaded retainer **132** is then screwed onto the externally threaded portion **130** of the nozzle such that the nozzle and retaining cup are urged together to compress the O-ring. Finally, the cup holder **78** is unscrewed from the fixture. The entire unit **134** comprising the nozzle retaining cup assembly **78, 80,** the nozzle **122,** and the retainer **132** is thereby removed from the fixture.

The unit **134** can then be combined with other components. For example, the diffuser **100** can be placed about the nozzle **122** and the shielding gas nozzle **94** and shield retainer **96** can be connected to the unit **134** by forming a releasable connection between the shield retainer **96** and the cup holder **78.** In this regard, the shield retainer can be internally threaded at its rear end for engaging an externally threaded front end of the cup holder, as depicted in FIG. 1A. Thus, all of the front end parts of the torch form a single unit that is pre-assembled and can then be installed on the torch body assembly by screwing the cup holder **78** onto the torch outer housing **82.**

Disassembly is effected by reversing the sequence of assembly steps described above. More particularly, the unit comprising all of the front end parts is removed from the torch body assembly by unscrewing the cup holder **78** from the torch outer housing **82,** thus gaining access to the electrode **20.** The electrode can then be removed and replaced, and the unit then reassembled to the torch body assembly.

In the event that the nozzle **122** requires replacement, the unit is removed from the torch as noted above and is secured to the assembly fixture **140** by screwing the cup holder **78** onto the threaded portion **144** of the fixture. The shield retainer **96** is unscrewed from the cup holder **78** and the shield retainer **96,** shielding gas nozzle **94,** and diffuser **100** are removed. The retainer **132** is then unscrewed and removed, and the cup holder **78** is unscrewed from the fixture and removed along with the retaining cup **80.** The nozzle can then be removed from the fixture and a replacement nozzle placed on the fixture. The unit of front end parts is then reassembled and installed in the torch body assembly as previously described.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A plasma arc torch (10), comprising:
a torch body assembly comprising a generally cylindrical torch body (14) and an insulator body (16) disposed in the torch body (14);
an electrode assembly (18) mounted in the torch body assembly, an electrode (20) of the electrode assembly (18) projecting out from a front end of the insulator body (16);
a nozzle (122) engaged with the torch body assembly and defining a central bore extending therethrough for directing a flow of a plasma gas from the central bore through an exit orifice defined in a front end of the nozzle, the nozzle (122) comprising an externally threaded portion (130) and a front-facing surface (128) spaced rearwardly of the externally threaded portion (130);
a hollow generally cylindrical nozzle retaining cup assembly (78, 80) comprising a rear portion (78) forming a releasable connection with the torch body assembly and a front portion (80) defining an aperture (124) through which the externally threaded portion (130) of the nozzle (122) projects, the front portion (80) further defining a rear-facing surface (126) surrounding the aperture (124) and opposing the front-facing surface (128) of the nozzle (122); and
**characterised by** an internally threaded retainer (132) engaging the externally threaded portion (130) of the nozzle (122) and engaging the front portion (80) of the nozzle retaining cup assembly to urge the front-facing surface (128) of the nozzle (122) toward the rear-facing surface (126) of the nozzle retaining cup assembly so as to retain the nozzle retaining cup assembly and the nozzle together as a unit (134), said unit (134) being removable from the torch body assembly by disengaging the releasable connection between the nozzle retaining cup assembly (78, 80) and the torch body assembly so as to provide access to the electrode assembly (18).

2. The plasma arc torch of claim 1, wherein the releasable connection between the nozzle retaining cup assembly (78, 80) and the torch body assembly comprises a threaded connection (79, 144).

3. The plasma arc torch of claim 1, further comprising:
a shielding gas nozzle (94) engaging the nozzle and concentrically surrounding the nozzle such that a shielding gas flow passage (98) is defined between a radially inner surface of the shielding gas nozzle and a radially outer surface of the nozzle; and
a shield retainer (96) engaging the shielding gas nozzle (94) to retain the shielding gas nozzle in engagement with the nozzle, the shield retainer forming a releasable connection with the nozzle retaining cup assembly;
the shielding gas nozzle (94) and shield retainer (96) forming part of said unit (134) that is removable from the torch body assembly for accessing the electrode.

4. The plasma arc torch of claim 3, further comprising a diffuser (100) disposed between the shielding gas nozzle (94) and the nozzle for conditioning a flow of shielding gas through the shielding gas flow passage (98).

5. The plasma arc torch of claim 3, wherein the nozzle retaining cup assembly (78, 80) includes an externally threaded portion and the shield retainer (96) includes an internally threaded portion forming said releasable connection with said externally threaded portion of the nozzle retaining cup assembly.

6. The plasma arc torch of claim 1, further comprising a sealing element disposed between the rear-facing surface (126) of the nozzle retaining cup assembly and the front-facing surface (128) of the nozzle.

7. The plasma arc torch of claim 1, wherein the nozzle retaining cup assembly (78, 80) comprises a retaining cup (80) defining the aperture (124) and the rear-facing surface (126), and a cup holder (78) formed separately from the retaining cup, the cup holder forming the releasable connection with the torch body assembly, the cup holder being affixed to the retaining cup.

8. The plasma arc torch of claim 7, wherein the cup holder (78) is electrically conductive and the retaining cup (80) is electrically insulating.

9. A method for assembling a plasma arc torch that includes a torch body assembly comprising a generally cylindrical torch body (14) and an insulator body (16) disposed in the torch body, and an electrode assembly (18) mounted in the torch body assembly, an electrode (20) of the electrode assembly projecting out from a front end of the insulator body, the method comprising the steps of:
providing a nozzle (122) structured and arranged to be engaged with the torch body assembly and defining a central bore extending therethrough for a flow of a plasma gas that is discharged from the central bore through an exit orifice defined in a front end of the nozzle, the nozzle comprising an externally threaded portion (130) and a front-facing surface (128) spaced rearwardly of the externally threaded portion;
providing a hollow generally cylindrical nozzle retaining cup assembly (78, 80) comprising a rear portion (78) structured and arranged to form a releasable connection with the torch body assembly and a front portion (80) defining an aperture (124) sized to receive the externally threaded portion (130) of the nozzle therethrough, the front portion further defining a rear-facing surface (126) surrounding the aperture for opposing the front-facing surface (128) of the nozzle;
providing an internally threaded retainer (132) structured and arranged to engage the externally threaded portion (130) of the nozzle;
positioning the rear-facing surface (126) of the nozzle retaining cup assembly (78, 80) in opposition with the front-facing surface (128) of the nozzle (122) such that the externally threaded portion (130) of the nozzle projects out from the aperture (124);
engaging the internally threaded retainer (132) with the externally threaded portion (130) of the nozzle and with the front portion (80) of the nozzle retaining cup assembly to retain the nozzle retaining cup assembly and the nozzle together as a unit (134); and
assembling said unit (134) with the torch body assembly by forming the releasable connection between the nozzle retaining cup assembly and the torch body assembly.

10. The method of claim 9, wherein the positioning step comprises:
providing an assembly fixture (140) having a connection portion (144) structured and arranged to form a releasable connection with the rear portion (78) of the nozzle retaining cup assembly, the assembly fixture defining a support surface (148) for engaging a rear end of the nozzle (122) and a centering portion (150) for engaging the nozzle so as to position the nozzle concentrically with respect to the assembly fixture;
positioning the nozzle (122) on the assembly fixture (140) with the rear end of the nozzle on the support surface (148) and the centering portion (150) of the assembly fixture engaging the nozzle; and
placing the retaining cup assembly (78, 80) over the nozzle (122) on the assembly fixture (140) such that the externally threaded portion (130) of the nozzle projects through the aperture (124) and the rear-facing surface (126) of the nozzle retaining cup assembly opposes the front-facing surface (128) of the nozzle, and forming the releasable connection between the rear portion (78) of the retaining cup assembly and the connection portion (144) of the assembly fixture.

11. The method of claim 10, wherein the step of engaging the internally threaded retainer (132) with the externally threaded portion (130) of the nozzle (122) so as to form said unit (134) is performed while the nozzle and nozzle retaining cup assembly are positioned on the assembly fixture (140), and further comprising the step of removing said unit (134) from the assembly fixture (140) prior to assembling said unit with the torch body assembly.

12. The method of claim 11, further comprising, after said unit (134) is removed from the assembly fixture (140) and prior to assembling said unit with the torch body assembly, the steps of:
engaging a shielding gas nozzle (94) with the nozzle and concentrically surrounding the nozzle such that a shielding gas flow passage (98) is defined between a radially inner surface of the shielding gas nozzle and a radially outer surface of the nozzle; and
engaging a shield retainer (96) with the shielding gas nozzle (94) to retain the shielding gas nozzle in engagement with the nozzle.

13. The method of claim 12, wherein the step of engaging the shield retainer (96) with the shielding gas nozzle (94) includes forming a releasable connection between the shield retainer (96) and the nozzle retaining cup assembly (78, 80).

14. The method of claim 13, wherein the step of forming the releasable connection between the shield retainer (96) and the nozzle retaining cup assembly (78, 80) comprises engaging an internally threaded portion of the shield retainer with an externally threaded portion of the nozzle retaining cup assembly.

15. The method of claim 10, wherein the step of forming the releasable connection between the rear portion (78) of the retaining cup assembly (78, 80) and the connection portion (144) of the assembly fixture (140) comprises engaging threads (79) on the rear portion (78) of the nozzle retaining cup assembly with threads on the assembly fixture (140).

16. The method of claim 9, further comprising the step of positioning a sealing element on the front-facing surface (128) of the nozzle (122) prior to the step of positioning the rear-facing surface (126) of the nozzle retaining cup assembly (78, 80) in opposition with the front-facing surface (128) of the nozzle.

17. The method of claim 16, wherein the sealing element is resiliently compressible, and the step of engaging the internally threaded retainer (132) with the externally threaded portion (130) of the nozzle (122) and with the front portion (80) of the nozzle retaining cup assembly causes the sealing element to be compressed between the nozzle retaining cup assembly and the nozzle.

18. The method of claim 9, further comprising disassembling the plasma arc torch, the disassembling step comprising the steps of:
disengaging the releasable connection between the nozzle retaining cup assembly (78, 80) and the torch body assembly; and
removing said unit (134) from the torch body assembly so as to provide access to the electrode assembly (18).

19. The method of claim 9, further comprising replacing the electrode assembly (18), the replacing step comprising the steps of:
disengaging the releasable connection between the nozzle retaining cup assembly (78, 80) and the torch body assembly;
removing said unit (134) from the torch body assembly so as to provide access to the electrode assembly (18);
removing the electrode assembly (18) from the torch body assembly and installing a replacement electrode assembly in the torch body assembly; and
re-assembling said unit (134) with the torch body assembly by reestablishing the releasable connection between the nozzle retaining cup assembly (78, 80) and the torch body assembly.

## Patentansprüche

1. Plasmalichtbogenbrenner (10), der Folgendes umfasst:
eine Brennerkorpus-Baugruppe, die einen im Allgemeinen zylindrischen Brennerkorpus (14) und einen Isolatorkorpus (16), der in dem Brennerkorpus (14) angeordnet ist, umfasst,
eine Elektrodenbaugruppe (18), die in der Brennerkorpus-Baugruppe angeordnet ist, wobei eine Elektrode (20) der Elektrodenbaugruppe (18) aus einem vorderen Ende des Isolatorkorpus (16) heraus vorspringt,
eine Düse (122), die in Eingriff mit der Brennerkorpus-Baugruppe gebracht ist und eine mittige Bohrung definiert, die sich durch dieselbe erstreckt, um einen Strom eines Plasmagases von der mittigen Bohrung durch eine Auslassöffnung zu leiten, die in einem vorderen Ende der Düse definiert ist, wobei die Düse (122) einen mit einem Außengewinde versehenen Abschnitt (130) und eine nach vorn zeigende Fläche (128), die mit Zwischenraum nach hinten von dem mit einem Außengewinde versehenen Abschnitt (130) angeordnet ist, umfasst,
eine hohle, im Allgemeinen zylindrische Düsenhalteschalen-Baugruppe (78, 80), die einen hinteren Abschnitt (78), der eine lösbare Verbindung mit der Brennerkorpus-Baugruppe bildet, und einen vorderen Abschnitt (80), der eine Öffnung (124) definiert, durch die der mit einem Außengewinde versehene Abschnitt (130) der Düse (122) vorspringt, umfasst, wobei der vordere Abschnitt (80) ferner eine nach hinten zeigende Fläche (126) definiert, welche die Öffnung (124) umschließt und der nach vorn zeigenden Fläche (128) der Düse (122) gegenüberliegt,
**gekennzeichnet durch** einen mit einem Innengewinde versehenen Halter (132), der den mit einem Außengewinde versehenen Abschnitt (130) der Düse (122) in Eingriff nimmt und den vorderen Abschnitt (80) der Düsenhalteschalen-Baugruppe in Eingriff nimmt, um die nach vorn zeigende Fläche (128) der Düse (122) zu der nach hinten zeigenden Fläche (126) der Düsenhalteschalen-Baugruppe zu drücken, um so die Düsenhalteschalen-Baugruppe und die Düse als eine Einheit (134) zusammenzuhalten, wobei die Einheit (134) **durch** ein Ausrücken der lösbaren Verbindung zwischen der Düsenhalteschalen-Baugruppe (78, 80) und der Brennerkorpus-Baugruppe von der Brennerkorpus-Baugruppe abgenommen werden kann, um einen Zugang zu der Elektrodenbaugruppe (18) zu gewähren.

2. Plasmalichtbogenbrenner nach Anspruch 1, wobei die lösbare Verbindung zwischen der Düsenhalteschalen-Baugruppe (78, 80) und der Brennerkorpus-Baugruppe eine Gewindeverbindung (79, 144) umfasst.

3. Plasmalichtbogenbrenner nach Anspruch 1, der ferner Folgendes umfasst:
eine Schutzgasdüse (94), welche die Düse in Eingriff nimmt und die Düse konzentrisch umschließt derart, dass ein Schutzgas-Durchflussdurchgang (98) zwischen einer in Radialrichtung inneren Fläche der Schutzgasdüse und einer in Radialrichtung äußeren Fläche der Düse definiert wird, und
ein Schutzhalter (96) die Schutzgasdüse (94) in Eingriff nimmt, um die Schutzgasdüse in Eingriff mit der Düse zu halten, wobei der Schutzhalter eine lösbare Verbindung mit der Düsenhalteschalen-Baugruppe bildet,
wobei die Schutzgasdüse (94) und der Schutzhalter (96) einen Teil der Einheit (134) bilden, die von der Brennerkorpus-Baugruppe abgenommen werden kann, um einen Zugang zu der Elektrode zu gewähren.

4. Plasmalichtbogenbrenner nach Anspruch 3, der ferner einen Diffusor (100) umfasst, der zwischen der Schutzgasdüse (94) und der Düse angeordnet ist, um einen Durchfluss von Schutzgas durch den Schutzgas-Durchflussdurchgang (98) aufzubereiten.

5. Plasmalichtbogenbrenner nach Anspruch 3, wobei die Düsenhalteschalen-Baugruppe (78, 80) einen mit einem Außengewinde versehenen Abschnitt einschließt und der Schutzhalter (96) einen mit einem Innengewinde versehenen Abschnitt einschließt, der eine lösbare Verbindung mit dem mit einem Außengewinde versehenen Abschnitt der Düsenhalteschalen-Baugruppe bildet.

6. Plasmalichtbogenbrenner nach Anspruch 1, der ferner ein Abdichtungselement umfasst, das zwischen der nach hinten zeigenden Fläche (126) der Düsenhalteschalen-Baugruppe und der nach vorn zeigenden Fläche (128) der Düse angeordnet ist.

7. Plasmalichtbogenbrenner nach Anspruch 1, wobei die Düsenhalteschalen-Baugruppe (78, 80) eine Halteschale (80), welche die Öffnung (124) und die nach hinten zeigende Fläche (126) definiert, und eine Schalenhalterung (78), die gesondert von der Halteschale geformt ist, umfasst, wobei die Schalenhalterung die lösbare Verbindung mit der Brennerkorpus-Baugruppe bildet, wobei die Schalenhalterung an der Halteschale befestigt ist.

8. Plasmalichtbogenbrenner nach Anspruch 7, wobei die Schalenhalterung (78) elektrisch leitfähig ist und die Halteschale (80) elektrisch isolierend ist.

9. Verfahren zum Zusammenbauen eines Plasmalichtbogenbrenners, der eine Brennerkorpus-Baugruppe, die einen im Allgemeinen zylindrischen Brennerkorpus (14) und einen Isolatorkorpus (16), der in dem Brennerkorpus angeordnet ist, umfasst, und eine Elektrodenbaugruppe (18), die in der Brennerkorpus-Baugruppe angeordnet ist, einschließt, wobei eine Elektrode (20) der Elektrodenbaugruppe aus einem vorderen Ende des Isolatorkorpus heraus vorspringt, wobei das Verfahren die folgenden Schritte umfasst:
das Bereitstellen einer Düse (122), die dafür strukturiert und angeordnet ist, in Eingriff mit der Brennerkorpus-Baugruppe gebracht zu werden, und eine mittige Bohrung definiert, die sich durch dieselbe erstreckt, um einen Strom eines Plasmagases von der mittigen Bohrung durch eine Auslassöffnung zu leiten, die in einem vorderen Ende der Düse definiert ist, wobei die Düse einen mit einem Außengewinde versehenen Abschnitt (130) und eine nach vorn zeigende Fläche (128), die mit Zwischenraum nach hinten von dem mit einem Außengewinde versehenen Abschnitt angeordnet ist, umfasst,
das Bereitstellen einer hohlen, im Allgemeinen zylindrischen Düsenhalteschalen-Baugruppe (78, 80), die einen hinteren Abschnitt (78), der dafür strukturiert und angeordnet ist, eine lösbare Verbindung mit der Brennerkorpus-Baugruppe zu bilden, und einen vorderen Abschnitt (80), der eine Öffnung (124) definiert, die dafür bemessen ist, den mit einem Außengewinde versehenen Abschnitt (130) der Düse durch dieselbe aufzunehmen, umfasst, wobei der vordere Abschnitt ferner eine nach hinten zeigende Fläche (126) definiert, welche die Öffnung (124) umschließt, um der nach vorn zeigenden Fläche (128) der Düse gegenüberzuliegen,
das Bereitstellen eines mit einem Innengewinde versehenen Halters (132), der dafür strukturiert und angeordnet ist, den mit einem Außengewinde versehenen Abschnitt (130) der Düse in Eingriff zu nehmen,
das Anordnen der nach hinten zeigenden Fläche (126) der Düsenhalteschalen-Baugruppe (78, 80) in Gegenüberstellung mit der nach vorn zeigenden Fläche (128) der Düse (122) derart, dass der mit einem Außengewinde versehene Abschnitt (130) der Düse aus der Öffnung (124) heraus vorspringt,
das In-Eingriff-Bringen des mit einem Innengewinde versehenen Halters (132) mit dem mit einem Außengewinde versehenen Abschnitt (130) der Düse und mit dem vorderen Abschnitt (80) der Düsenhalteschalen-Baugruppe, um die Düsenhalteschalen-Baugruppe und die Düse als eine Einheit (134) zusammenzuhalten, und
das Zusammenbauen der Einheit (134) mit der Brennerkorpus-Baugruppe durch ein Bilden der lösbaren Verbindung zwischen der Düsenhalteschalen-Baugruppe und der Brennerkorpus-Baugruppe.

10. Verfahren nach Anspruch 9, wobei der Anordnungsschritt Folgendes umfasst:
das Bereitstellen einer Montagebefestigung (140), die einen Verbindungsabschnitt (144) hat, der dafür strukturiert und angeordnet ist, eine lösbare Verbindung mit dem hinteren Abschnitt (78) der Düsenhalteschalen-Baugruppe zu bilden, wobei die Montagebefestigung eine Stützfläche (148) zum In-Eingriff-Nehmen eines hinteren Endes der Düse (122) und einen Zentrierabschnitt (150) zum In-Eingriff-Nehmen der Düse umfasst, um so die Düse konzentrisch in Bezug auf die Montagebefestigung anzuordnen,
das Anordnen der Düse (122) auf der Montagebefestigung (140) mit dem hinteren Ende der Düse auf der Stützfläche (148) und dem Zentrierabschnitt (150) der Montagebefestigung in Eingriff mit der Düse und
das Platzieren der Düsenhalteschalen-Baugruppe (78, 80) über der Düse (122) auf der Montagebefestigung (140) derart, dass mit einem Außengewinde versehenen Abschnitt (130) der Düse durch die Öffnung (124) hindurch vorspringt und die nach hinten zeigende Fläche (126) der Düsenhalteschalen-Baugruppe der nach vorn zeigenden Fläche (128) der Düse gegenüberliegt, und das Bilden der lösbaren Verbindung zwischen dem hinteren Abschnitt (78) der Düsenhalteschalen-Baugruppe und dem Verbindungsabschnitt (144) der Montagebefestigung.

11. Verfahren nach Anspruch 10, wobei der Schritt des In-Eingriff-Bringens des mit einem Innengewinde versehenen Halters (132) mit dem mit einem Außengewinde versehenen Abschnitt (130) der Düse (122), um so die Einheit (134) zu bilden, durchgeführt wird, während die Düse und die Düsenhalteschalen-Baugruppe auf der Montagebefestigung (140) angeordnet sind, und das ferner den Schritt des Entfernens der Einheit (134) von der Montagebefestigung (140) vor dem Zusammenbauen der Einheit mit der Brennerkorpus-Baugruppe umfasst.

12. Verfahren nach Anspruch 11, das ferner, nachdem die Einheit (134) von der Montagebefestigung (140) entfernt ist und vor dem Zusammenbauen der Einheit mit der Brennerkorpus-Baugruppe, die folgenden Schritte umfasst:
das In-Eingriff-Bringen einer Schutzgasdüse (94) mit der Düse und das konzentrische Umschließen der Düse derart, dass ein Schutzgas-Durchflussdurchgang (98) zwischen einer in Radialrichtung inneren Fläche der Schutzgasdüse und einer in Radialrichtung äußeren Fläche der Düse definiert wird, und
das In-Eingriff-Bringen eines Schutzhalters (96) mit der Schutzgasdüse (94), um die Schutzgasdüse in Eingriff mit der Düse zu halten.

13. Verfahren nach Anspruch 12, wobei der Schritt des In-Eingriff-Bringens des Schutzhalters (96) mit der Schutzgasdüse (94) das Bilden einer lösbaren Verbindung zwischen dem Schutzhalter (96) und der Düsenhalteschalen-Baugruppe (78, 80) einschließt.

14. Verfahren nach Anspruch 13, wobei der Schritt des Bildens der lösbaren Verbindung zwischen dem Schutzhalter (96) und der Düsenhalteschalen-Baugruppe (78, 80) das In-Eingriff-Bringen eines mit einem Innengewinde versehenen Abschnitts des Schutzhalters mit einem mit einem Außengewinde versehenen Abschnitt der Düsenhalteschalen-Baugruppe umfasst.

15. Verfahren nach Anspruch 10, wobei der Schritt des Bildens der lösbaren Verbindung zwischen dem hinteren Abschnitt (78) der Düsenhalteschalen-Baugruppe (78, 80) und dem Verbindungsabschnitt (144) der Montagebefestigung (140) das In-Eingriff-Bringen von Gewinden (79) an dem hinteren Abschnitt (78) der Düsenhalteschalen-Baugruppe mit Gewinden an der Montagebefestigung (140) umfasst.

16. Verfahren nach Anspruch 9, das ferner den Schritt des Anordnens eines Abdichtungselements an der nach vorn zeigenden Fläche (128) der Düse (122) vor dem Schritt des Anordnens der nach hinten zeigenden Fläche (126) der Düsenhalteschalen-Baugruppe (78, 80) in einer Gegenüberstellung mit der nach vorn zeigenden Fläche (128) der Düse umfasst.

17. Verfahren nach Anspruch 16, wobei das Abdichtungselement elastisch zusammengedrückt werden kann und der Schritt des In-Eingriff-Bringens des mit einem Innengewinde versehenen Halters (132) mit dem mit einem Außengewinde versehenen Abschnitt (130) der Düse (122) und mit dem vorderen Abschnitt (80) der Düsenhalteschalen-Baugruppe bewirkt, dass das Abdichtungselement zwischen der Düsenhalteschalen-Baugruppe und der Düse zusammengedrückt wird.

18. Verfahren nach Anspruch 9, das ferner das Auseinanderbauen des Plasmalichtbogenbrenners umfasst, wobei der Auseinanderbauschritt die folgenden Schritte umfasst:
das Ausrücken der lösbaren Verbindung zwischen der Düsenhalteschalen-Baugruppe (78, 80) und der Brennerkorpus-Baugruppe,
das Abnehmen der Einheit (134) von der Brennerkorpus-Baugruppe, um so einen Zugang zu der Elektrodenbaugruppe (18) zu gewähren.

19. Verfahren nach Anspruch 9, das ferner das Austauschen der Elektrodenbaugruppe (18) umfasst, wobei der Austauschschritt die folgenden Schritte umfasst:
das Ausrücken der lösbaren Verbindung zwischen der Düsenhalteschalen-Baugruppe (78, 80) und der Brennerkorpus-Baugruppe,
das Abnehmen der Einheit (134) von der Brennerkorpus-Baugruppe, um so einen Zugang zu der Elektrodenbaugruppe (18) zu gewähren,
das Abnehmen der Elektrodenbaugruppe (18) von der Brennerkorpus-Baugruppe und das Einbauen einer Ersatz-Elektrodenbaugruppe in der Brennerkorpus-Baugruppe und
das erneute Zusammenbauen der Einheit (134) mit der Brennerkorpus-Baugruppe durch das Wiederherstellen der lösbaren Verbindung zwischen der Düsenhalteschalen-Baugruppe (78, 80) und der Brennerkorpus-Baugruppe.

## Revendications

1. Torche à arc de plasma (10), comprenant :
un ensemble de corps de torche comprenant un corps de torche généralement cylindrique (14) et un corps isolant (16) disposé dans le corps de torche (14) ;
un ensemble d'électrode (18) monté dans l'ensemble de corps de torche, une électrode (20) de l'ensemble d'électrode (18) faisant saillie d'une extrémité frontale du corps isolant (16) ;
une buse (122) engagée sur l'ensemble de corps de torche et définissant un alésage central qui la traverse pour diriger un flux de gaz de plasma depuis l'alésage central à travers un orifice de sortie défini dans une extrémité frontale de la buse, la buse (122) comprenant une portion filetée extérieurement (130) et une surface (128) tournée vers l'avant et espacée à l'arrière de la portion filetée extérieurement (130) ;
un ensemble de godet creux généralement cylindrique (78, 80) retenant la buse, comprenant une portion arrière (78) formant une liaison libérable avec l'ensemble de corps de torche et une portion avant (80) définissant une ouverture (124) à travers laquelle la portion filetée extérieurement (130) de la buse (122) fait saillie, la portion avant (80) définissant par ailleurs une surface (126) tournée vers l'arrière entourant l'ouverture (124) et opposée à la surface (128) tournée vers l'avant de la buse (122) ; et
**caractérisé par** un élément de retenue taraudé intérieurement (132) s'engageant sur la portion filetée extérieurement (130) de la buse (122) et s'engageant sur la portion avant (80) de l'ensemble de godet retenant la buse pour presser la surface (128) de la buse (122) vers la surface (126) tournée vers l'avant de la buse (122) vers la surface (126) tournée vers l'arrière de l'ensemble de godet retenant la buse de manière à retenir l'ensemble de godet retenant la buse et la buse elle-même conjointement sous la forme d'une unité (134), ladite unité (134) pouvant être enlevée de l'ensemble de corps de torche en dégageant la liaison libérable entre l'ensemble de godet (78, 80) retenant la buse et l'ensemble de corps de torche de manière à fournir un accès à l'ensemble d'électrode (18).

2. Torche à arc de plasma selon la revendication 1, dans laquelle la liaison libérable entre l'ensemble de godet (78, 80) retenant la buse et l'ensemble de corps de torche comprend une liaison filetée (79, 144).

3. Torche à arc de plasma selon la revendication 1, comprenant en outre :
une buse à gaz de protection (94) s'engageant sur la buse et entourant concentriquement la buse de sorte qu'un passage d'écoulement de gaz de protection (98) soit défini entre une surface radialement interne de la buse à gaz de protection et une surface radialement externe de la buse ; et
un maintien de protection (96) s'engageant sur la buse à gaz de protection (94) pour retenir la buse à gaz de protection engagée sur la buse, le maintien de protection formant une liaison libérable avec l'ensemble de godet retenant la buse ;
la buse à gaz de protection (94) et le maintien de protection (96) faisant partie de ladite unité (134) qui peut être retirée de l'ensemble de corps de torche pour accéder à l'électrode.

4. Torche à arc de plasma selon la revendication 3, comprenant en outre un diffuseur (100) disposé entre la buse à gaz de protection (94) et la buse pour conditionner un écoulement de gaz de protection à travers le passage d'écoulement de gaz de protection (98).

5. Torche à arc de plasma selon la revendication 3, dans laquelle l'ensemble de godet retenant la buse (78, 80) comprend une portion filetée extérieurement et le maintien de protection (96) comprend une portion taraudée intérieurement formant ladite liaison libérable avec la portion filetée extérieurement de l'ensemble de godet retenant la buse.

6. Torche à arc de plasma selon la revendication 1, comprenant en outre un élément d'étanchéité disposé entre la surface (126), tournée vers l'arrière, de l'ensemble de godet retenant la buse et la surface (128), tournée vers l'avant, de la buse.

7. Torche à arc de plasma selon la revendication 1, dans laquelle l'ensemble de godet (78, 80) retenant la buse comprend un godet de retenue (80) définissant l'ouverture (124) et la surface (126) tournée vers l'arrière, et un porte-godet (78) formé séparément du godet de retenue, le porte-godet formant la liaison libérable avec l'ensemble de corps de torche, le porte-godet étant fixé au godet de retenue.

8. Torche à arc de plasma selon la revendication 7, dans laquelle le porte-godet (78) est conducteur de l'électricité et le godet de retenue (80) est isolant au plan électrique.

9. Procédé d'assemblage d'une torche à arc de plasma qui comprend un ensemble de corps de torche comprenant un corps de torche généralement cylindrique (14) et un corps isolant (16) disposé dans le corps de torche, et un ensemble d'électrode (18) monté dans l'ensemble de corps de torche, une électrode (20) de l'ensemble d'électrode faisant saillie d'une extrémité avant du corps isolant, le procédé comprenant les étapes consistant à :
mettre en oeuvre une buse (122) structurée et aménagée pour s'engager sur l'ensemble de corps de torche et définissant un alésage central qui la traverse pour un écoulement de gaz de plasma qui est déchargé par l'alésage central à travers un orifice de sortie défini dans une extrémité avant de la buse, la buse comprenant une portion filetée extérieurement (130) et une surface (128) tournée vers l'avant et espacée vers l'arrière de la portion extérieurement filetée ;
mettre en oeuvre un ensemble de godet creux généralement cylindrique (78, 80) retenant la buse, comprenant une portion arrière (78) structurée et aménagée pour former une liaison libérable avec l'ensemble de corps de torche et une portion avant (80) définissant une ouverture (124) calibrée pour recevoir la portion filetée extérieurement (130) de la buse à travers elle, la portion avant définissant en outre une surface (126) tournée vers l'arrière et entourant l'ouverture pour s'opposer à la surface (128) de la buse tournée vers l'avant ;
mettre en oeuvre un élément de retenue taraudé intérieurement (132) structuré et aménagé pour s'engager sur la portion filetée extérieurement (130) de la buse ;
s'engager sur l'élément de retenue taraudé intérieurement (132) sur la portion filetée extérieurement (130) de la buse et sur la portion avant (80) de l'ensemble de godet retenant la buse afin de retenir l'ensemble de godet retenant la buse et la buse conjointement sous la forme d'une seule unité (134) ; et
assembler ladite unité (134) avec l'ensemble de corps de torche en formant la liaison libérable entre l'ensemble de godet retenant la buse et l'ensemble de corps de torche.

10. Procédé selon la revendication 9, dans lequel l'étape de positionnement comprend les étapes consistant à :
mettre en oeuvre un dispositif d'assemblage (140) ayant une portion de liaison (144) structurée et aménagée pour former une liaison libérable avec la portion arrière (78) de l'ensemble de godet retenant la buse, le dispositif d'assemblage définissant une surface de support (148) pour s'engager sur une extrémité arrière de la buse (122) et sur une portion de centrage (150) pour s'engager sur la buse de manière à positionner celle-ci concentriquement par rapport au dispositif d'assemblage ;
positionner la buse (122) sur le dispositif d'assemblage (140) avec l'extrémité arrière de la buse sur la surface de support (148) et la portion de centrage (150) du dispositif d'assemblage s'engageant sur la buse ; et
placer l'ensemble de godet de retenue (78, 80) sur la buse (122) sur le dispositif d'assemblage (140) de sorte que la portion filetée extérieurement (130) de la buse fasse saillie à travers l'ouverture (124) et que la surface (126), tournée vers l'arrière, de l'ensemble de godet retenant la buse est opposée à la surface (128) de la buse tournée vers l'avant, et former la liaison libérable entre la portion arrière (78) de l'ensemble de godet de retenue et la portion de liaison (144) du dispositif d'assemblage.

11. Procédé selon la revendication 10, dans lequel l'étape d'engagement de l'élément de retenue taraudé intérieurement (132) avec la portion filetée extérieurement (130) de la buse (122) de manière à former ladite unité (134) est réalisée tandis que la buse et l'ensemble à godet retenant la buse sont positionnés sur le dispositif d'assemblage (140), et comprenant en outre l'étape de retrait de ladite unité (134) du dispositif d'assemblage (140) avant d'assembler ladite unité avec l'ensemble de corps de torche.

12. Procédé selon la revendication 11, comprenant en outre, après que ladite unité (134) a été retirée du dispositif d'assemblage (140) et avant d'assembler ladite unité avec l'ensemble de corps de torche, les étapes consistant à :
engager une buse à gaz de protection (94) sur la buse et entourant concentriquement la buse de sorte que le passage d'écoulement de gaz de protection (98) soit défini entre une surface radialement interne de la buse de gaz de protection et une surface radialement externe de la buse ; et
engager un maintien de protection (96) sur la buse de gaz de protection (94) pour retenir la buse de gaz de protection engagée sur la buse.

13. Procédé selon la revendication 12, dans lequel l'étape d'engagement de le maintien de protection (96) avec la buse à gaz de protection (94) comprend la formation d'une liaison libérable entre le maintien de protection (96) et l'ensemble de godet (78, 80) retenant la buse.

14. Procédé selon la revendication 13, dans lequel l'étape de formation de la liaison libérable entre le maintien de protection (96) et l'ensemble de godet (78, 80) retenant la buse comprend l'engagement d'une portion intérieurement taraudée de le maintien de protection avec une portion extérieurement filetée de l'ensemble de godet retenant la buse.

15. Procédé selon la revendication 10, dans lequel l'étape de formation de la liaison libérable entre la portion arrière (78) de l'ensemble de godet de retenue (78, 80) et la portion de liaison (144) du dispositif d'assemblage (140) comprend l'engagement de filets (79) sur la portion arrière (78) de l'ensemble de godet retenant la buse avec des filets ménagés sur le dispositif d'assemblage (140).

16. Procédé selon la revendication 9, comprenant en outre l'étape consistant à positionner un élément d'étanchéité sur la surface (128) de la buse (122) tournée vers l'avant avant l'étape de positionnement de la surface (126) de l'ensemble de godet (78, 80) retenant la buse tournée vers l'arrière en opposition avec la surface (128) de la buse tournée vers l'avant.

17. Procédé selon la revendication 16, dans lequel l'élément d'étanchéité est compressible de manière élastique et l'étape d'engagement de l'élément de retenue intérieurement taraudé (132) avec la portion extérieurement filetée (130) de la buse (122) et avec la portion avant (80) de l'ensemble de godet retenant la buse amène l'élément d'étanchéité à être comprimé entre l'ensemble de godet retenant la buse et la buse.

18. Procédé selon la revendication 9, comprenant en outre le désassemblage de la torche à arc de plasma, l'étape de désassemblage comprenant les étapes consistant à :
dégager la liaison libérable entre l'ensemble de godet (78, 80) retenant la buse et l'ensemble de corps de torche ; et
retirer ladite unité (134) de l'ensemble de corps de torche de manière à fournir un accès à l'ensemble d'électrode (18).

19. Procédé selon la revendication 9, comprenant en outre le remplacement de l'ensemble d'électrode (18), l'étape de remplacement comprenant les étapes consistant à :
dégager la liaison libérable entre l'ensemble de godet (78, 80) retenant la buse et l'ensemble de corps de torche ; et
retirer ladite unité (134) de l'ensemble de corps de torche de manière à fournir un accès à l'ensemble d'électrode (18),
retirer l'ensemble d'électrode (18) de l'ensemble de corps de torche et installer un ensemble d'électrode de remplacement dans l'ensemble de corps de torche ; et
réassembler ladite unité (134) avec l'ensemble de corps de torche en rétablissant la liaison libérable entre l'ensemble de godet (78, 80) retenant la buse et l'ensemble de corps de torche.
